# EUROPÄISCHE PATENTANMELDUNG

(11) **EP 4 056 323 A1**
(43) Veröffentlichungstag der Anmeldung: **14.09.2022**
(21) Anmeldenummer: 21162050.5
(22) Anmeldetag: 11.03.2021
(51) Int. Cl.: B25F 5/00, B28D 1/04

(54) **VERFAHREN ZUM BETRIEB EINER WERKZEUGMASCHINE UND WERKZEUGMASCHINE**

(71) Anmelder: Hilti Aktiengesellschaft, 9494 Schaan (LI)
(72) Erfinder: Sattler, Christian, 87640 Biessenhofen (DE); Wierer, Michael, 6832 Röthis (AT)
(74) Vertreter: Hilti Aktiengesellschaft Corporate Intellectual Property

(57) **Zusammenfassung**

Die vorliegende Erfindung betrifft ein Verfahren zum Betrieb einer Werkzeugmaschine (1). Die Werkzeugmaschine weist ein Werkzeug (2), insbesondere eine Bohrkrone, sowie einen Motor (3) auf, wobei der Motor (3) ein bürstenloser Elektromotor ist. In der Werkzeugmaschine (1) wird eine elektronisch ausgebildete Drehzahlabstufung umsetzt, mit der eine Umfangsgeschwindigkeit an dem Werkzeug (2) der Werkzeugmaschine im Wesentlichen konstant gehalten werden kann, wobei durch eine Auslegung, Dimensionierung und/oder Ansteuerung des Motors eine Drehzahlspreizung DELTA_n von größer 2 erreicht wird. In einem zweiten Aspekt betrifft die Erfindung ein Werkzeuggerät, beispielsweise ein Kernbohrgerät, mit dem das vorgeschlagene Verfahren durchgeführt werden kann. Ein wesentlicher Vorteil der Erfindung besteht darin, dass die Drehzahlspreizung DELTA_n von größer 2 ohne ein mechanisches Getriebe an der Werkzeugmaschine erreicht wird. Stattdessen kommt in der vorliegenden Erfindung eine elektronisch ausgebildete Drehzahlabstufung zum Einsatz.

## Beschreibung

Die vorliegende Erfindung betrifft ein Verfahren zum Betrieb einer Werkzeugmaschine. Die Werkzeugmaschine weist ein Werkzeug, insbesondere eine Bohrkrone, sowie einen Motor auf, wobei der Motor ein bürstenloser Elektromotor ist. In der Werkzeugmaschine wird eine elektronisch ausgebildete Drehzahlabstufung umgesetzt, mit der eine Umfangsgeschwindigkeit an dem Werkzeug der Werkzeugmaschine im Wesentlichen konstant gehalten werden kann, wobei durch eine Auslegung, Dimensionierung und/oder Ansteuerung des Motors eine Drehzahlspreizung DELTA_n von größer 2 erreicht wird. In einem zweiten Aspekt betrifft die Erfindung ein Werkzeuggerät, beispielsweise ein Kernbohrgerät, mit dem das vorgeschlagene Verfahren durchgeführt werden kann. Ein wesentlicher Vorteil der Erfindung besteht darin, dass die Drehzahlspreizung DELTA_n von größer 2 ohne ein mechanisches Getriebe an der Werkzeugmaschine erreicht wird. Stattdessen kommt in der vorliegenden Erfindung eine elektronisch ausgebildete Drehzahlabstufung zum Einsatz.

### Hintergrund der Erfindung:

Im Stand der Technik sind Werkzeuggeräte bekannt, mit denen verschiedene Anwendungen und Applikationen umgesetzt werden können. Solche Werkzeugmaschine können insbesondere Kernbohrgeräte sein, mit denen zylinderförmige Bohrkerne aus einem Untergrund, wie beispielsweise Beton, herausgearbeitet werden können. Diese Kernbohrgeräte weisen Bohrkronen als Werkzeuge auf, wobei Bohrkronen mit unterschiedlichen Durchmessern verwendet werden können, um unterschiedliche große Bohrlöcher zu erzeugen. Es ist im Stand der Technik darüber hinaus bekannt, dass Kernbohrgeräte ein mechanisches Getriebe aufweisen, damit ein Nutzer des Geräts einen Gang für den Betrieb des Kernbohrgeräts auswählen und einstellen kann. Der Nutzer kann dabei den Gang entsprechend der Anforderungen der geplanten Bohrarbeit oder des Untergrundes auswählen. Bei den Überlegungen, die der Gangauswahl bzw. Gangeinstellung zugrunde liegen, können beispielsweise das gewünschte Drehmoment, der Durchmesser der zu verwendenden Bohrkrone oder eine gewünschte Drehzahl der Bohrkrone eine Rolle spielen.

Bei der Bohrkrone kann es sich beispielsweise um eine Diamant-Bohrkrone handeln, die mit Diamanten besetzt ist, um ihre Schneidkraft zu erhöhen. Solche Diamant-Bohrkronen werden häufig verwendet, um Kernbohrungen in (armierten) Beton vorzunehmen. Für solche Beton-Kernbohrarbeiten sind in Abhängigkeit der verwendeten Bohrkrone unterschiedliche Kombinationen von Motor-Drehzahl und Motor-Drehmoment optimal.

Eine Gruppe von Bohrkronen, beispielsweise alle Bohrkronen eines Bohrkronentyps mit unterschiedlichen Durchmessern ("Bohrkronenlinie"), lässt sich zum Beispiel durch die sogenannte Durchmesserspreizung DELTA_d charakterisieren, die sich als Quotient eines maximalen Durchmessers d_max und eines minimalen Durchmessers d_min berechnen läßt: DELTA_d = d_max/d_min. Mit anderen Worten wird der Durchmesser der größten Bohrkrone einer Bohrkronenlinie durch den Durchmesser der kleinsten Bohrkrone einer Bohrkronenlinie geteilt, um die Durchmesserspreizung DELTA_d zu bestimmen. Übliche Abmessungen für Bohrkronen liegen beispielsweise in Bereichen von 12 bis 102 mm für den Durchmesser der Bohrkrone, 8 bis 162 mm, 12 bis 450 mm oder 82 bis 600 mm, wobei jeweils der erste angegebene Wert d_min darstellt und der zweite angegebene Wert d_max. Die angegebenen Bereiche für die Durchmesser von typischen Bohrkronen werden im Sinne der Erfindung bevorzugt auch als "Werkzeug-Durchmesser-Arbeitsbereich" der Bohrkrone bezeichnet. Aus den angegebenen minimalen und maximalen Durchmesserangaben läßt sich eine Durchmesserspreizung DELTA_d berechnen. Die entsprechenden Werte für die Durchmesserspreizung liegen bei den angegebenen Beispielbohrkronen beispielsweise bei 8,5; 20,3; 37,5 bzw. 7,3.

Eine Werkzeugmaschine lässt sich durch die sogenannte Drehzahlspreizung DELTA_n charakterisieren, die sich als Quotient einer maximalen Drehzahl n_max und einer minimalen Drehzahl n_min berechnen läßt: DELTA_n = n_max/n_min. Es hat sich gezeigt, dass es wünschenswert ist, wenn die Durchmesserspreizung DELTA_d des Werkzeugs und die Drehzahlspreizung DELTA_n der Werkzeugmaschine aufeinander abgestimmt werden könnten, so dass die Werkzeugmaschine mit einer optimalen Kombination von Motor-Drehzahl und Motor-Drehmoment für die verwendete Bohrkrone betrieben werden kann. Dies ist heute im Bereich der Werkzeugmaschinen, die ein mechanisches Getriebe aufweisen, eingeschränkt bereits möglich. Allerdings sind solche Werkzeugmaschinen mit mechanischem Schaltgetriebe sehr voluminös und unhandlich, so dass ihre Handhabung erschwert sein kann.

Im Stand der Technik sind Werkzeugmaschinen bekannt, die ein mechanisches Getriebe mit üblicherweise 2 oder 3 Gängen aufweisen. Mit diesen 2 oder 3 Gängen des mechanischen Getriebes gelingt es den Werkzeugmaschinen, eine Drehzahlspreizung DELTA_n in einem Bereich von beispielsweise 2 bis 5 zu ermöglichen, wobei die mit dem Getriebe und den zur Verfügung stehenden Gängen erreichten Drehzahlmöglichkeiten im Sinne der vorliegenden Erfindung bevorzugt als "Drehzahlabstufungen" bezeichnet werden.

Mit den Drehzahlabstufungen, die bei Werkzeugmaschine mit mechanischem Getriebe bereitgestellt werden können, ist es nachteiligerweise nicht möglich, alle verschiedenen Kombinationen von Bohrkronen-Abmessungen optimal zu bedienen. Es stellt einen bekannten Nachteil im Stand der Technik dar, dass nicht für alle Bohrkronen mit unterschiedlichen Bohrkronen-Durchmessern bzw. Durchmesserspreizungen durch die Werkzeugmaschine optimale Kombinationen von Motor-Drehzahl und Motor-Drehmoment bereitgestellt werden können. Vielmehr ist es bisher so, dass eine nicht-optimale Bedienung einzelner Bohrkronen-Typen in Kauf genommen wird, um die Werkzeugmaschinen kompakt zu halten und die Elektronik nicht zu aufwändig gestalten zu müssen. Insbesondere zeigt sich bei Werkzeugmaschinen, die aus dem Stand der Technik bekannt sind, dass Abstriche insbesondere bei der Bohrgeschwindigkeit oder bei der Standzeit der Werkzeugmaschinen in Kauf genommen werden müssen.

Die Aufgabe, die der vorliegenden Erfindung zugrunde liegt, besteht darin, eine Werkzeugmaschine und ein Verfahren zu deren Betrieb bereitzustellen, mit denen die Nachteile und Mängel des Standes der Technik überwunden werden können. Es sollen insbesondere eine Werkzeugmaschine und ein Betriebsverfahren angegeben werden, mit denen eine verbesserte Bedienung unterschiedlicher Werkzeuge in Bezug auf Motor-Drehzahl und Motor-Drehmoment durch die Werkzeugmaschine ermöglicht werden kann. Dadurch sollen eine erhöhte Bohrgeschwindigkeit und eine längere Lebenszeit der Werkzeugmaschine möglich gemacht werden. Darüber hinaus würde es die Fachwelt begrüßen, wenn leichte, kompakte und handliche Werkzeugmaschinen bereitgestellt werden könnten.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Verfahren zum Betrieb einer Werkzeugmaschine vorgesehen. Die Werkzeugmaschine weist ein Werkzeug, insbesondere eine Bohrkrone, sowie einen Motor auf, wobei es sich bei der Werkzeugmaschine insbesondere um ein Kernbohrgerät handeln kann. Das Verfahren ist dadurch gekennzeichnet, dass der Motor der Werkzeugmaschine ein bürstenloser Elektromotor ist und in der Werkzeugmaschine eine elektronisch ausgebildete Drehzahlabstufung umsetzt wird, mit der eine Umfangsgeschwindigkeit an dem Werkzeug der Werkzeugmaschine im Wesentlichen konstant gehalten wird, wobei durch eine Auslegung, Dimensionierung und/oder Ansteuerung des Motors eine Drehzahlspreizung DELTA_n von größer 2 erreicht wird. Es ist im Sinne der Erfindung ganz besonders bevorzugt, dass die Umfangsgeschwindigkeit an dem Schneid- und/oder Schleifkörper des Werkzeuges konstant bleibt. Der Schneid- und/oder Schleifkörper des Werkzeuges kann im Sinne der Erfindung bevorzugt auch als «Segment» bezeichnet werden.

In einem zweiten Aspekt betrifft die Erfindung eine Werkzeugmaschine mit einem Motor und einem Werkzeug, insbesondere einer Bohrkrone. Die Werkzeugmaschine ist zur Durchführung des vorgeschlagenen Verfahrens ausbildet, wobei der Motor der Werkzeugmaschine ein bürstenloser Elektromotor ist. Im Kontext der vorliegenden Erfindung kann mit der vorgeschlagenen Werkzeugmaschine vorteilhafterweise eine Drehzahlspreizung DELTA_n von größer 2 erreicht werden, wobei ein wesentlicher Vorteil der Erfindung darin besteht, dass die vorgeschlagene Werkzeugmaschine ohne mechanisches Getriebe auskommt. Stattdessen ist erfindungsgemäß vorgesehen, dass eine elektronisch ausgebildete Drehzahlabstufung umsetzt wird, mit der eine Umfangsgeschwindigkeit an dem Schneid- und/oder Schleifsegment des Werkzeuges der Werkzeugmaschine im Wesentlichen konstant gehalten werden kann. Dabei liegt die Umfangsgeschwindigkeit an der Bohrkrone bevorzugt in einem Bereich von 1 bis 10 m/s und besonders bevorzugt in einem Bereich von 2 bis 6 m/s. Die Drehzahlspreizung DELTA_n von größer 2 wird insbesondere durch eine Auslegung, Dimensionierung und/oder Ansteuerung des Motors der Werkzeugmaschine erreicht. Es ist im Sinne der Erfindung bevorzugt, dass die Werkzeugmaschine eine Steuer-Elektronik aufweist, mit der die entsprechenden Verfahrensschritte durchgeführt bzw. Einstellungen vorgenommen werden können. Die Steuer-Elektronik kann beispielsweise Bestandteil einer Steuervorrichtung sein, die ebenfalls Bestandteil der Werkzeugmaschine sein kann.

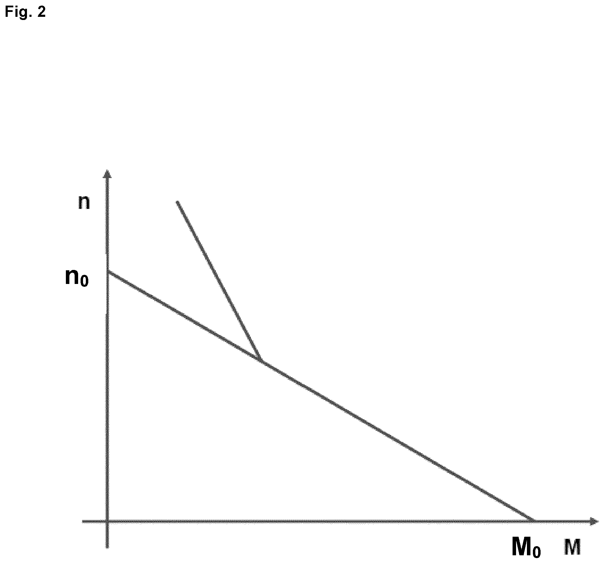

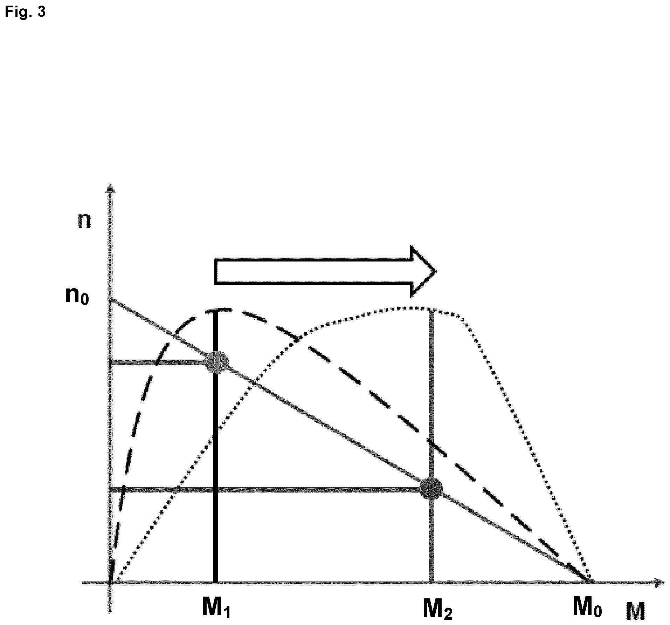

Eine Drehzahlspreizung DELTA_n von größer 2 bedeutet im Sinne der Erfindung bevorzugt, dass eine maximale Drehzahl n_max der Werkzeugmaschine bzw. ihres Motors mindestens doppelt so groß ist wie eine minimale Drehzahl n_min der Werkzeugmaschine bzw. ihres Motors. Ebenfalls sind für die minimale Drehzahl n_min und die maximale Drehzahl n_max die Werte der zugehörigen Drehmomente M_max und M_min zur Ausbildung eines für die Kernbohrungsanwendung geeigneten Arbeitspunktes gegeben. Es ist im Sinne der Erfindung ganz besonders bevorzugt, dass die im Kontext der vorliegenden Erfindung angestrebte Drehzahlspreizung DELTA_n von größer 2 in Abhängigkeit von dem Drehmoment und/oder den Arbeitspunkten auf den in den Fig. 2 und 3 dargestellten Kennlinien erreicht wird. Insbesondere werden zu diesem Zwecke ein Mindest-Leistungs-Bereich bzw. ein Mindest-Leistungs-Arbeitsbereich betrachtet.

Es ist im Sinne der Erfindung bevorzugt, dass die Leistung des Motors in Abhängigkeit von dem Drehmoment M im Wesentlichen parabelförmig ausgebildet ist. Dabei handelt es sich vorzugsweise um eine nach unten offene Parabel. Sie beginnt im Nullpunkt einer Leistungs-Drehmoment-Kurve, nimmt einen maximalen Wert bei dem halben Wert des maximalen Drehmoments M_max ein und schneidet die x-Achse bei diesem maximalen Drehmoments M_max. Es ist im Sinne der Erfindung bevorzugt, dass auf der x-Achse eines solchen Leistungs-Drehmoment-Koordinatensystems das Drehmoment M aufgetragen wird, während auf der y-Achse die Leistung P des Motors aufgetragen wird. Es hat sich gezeigt, dass die beschriebene Parabel durch die Erfindung in dem Leistungs-Drehmoment-Koordinatensystem nach oben verschoben werden kann. Dies führt vorteilhafterweise dazu, dass der Bereich auf der x-Ache, der im Inneren der Parabel liegt, größer wird. Dadurch kann der Bereich der minimalen Leistung bzw. der entsprechende Arbeitsbereich auf der x-Achse breiter werden, wobei diese Verbreiterung vorteilhafterweise auch zu der angestrebten vergrößerten Drehzahlspreizung größer als 2 führt, die auf der y-Achse abgebildet ist.

Die vorgeschlagene Werkzeugmaschine und das vorgeschlagene Betriebsverfahren ermöglichen vorteilhafterweise, dass Werkzeuge mit unterschiedlichen Abmessungen bzw. mit unterschiedlichen Werkzeug-Durchmesser-Arbeitsbereichen besser von der Werkzeugmaschine bedient werden können im Hinblick auf Motor-Drehzahl und/oder Motor-Drehmoment. Das bedeutet im Sinne der Erfindung bevorzugt, dass für diese Werkzeuge bzw. Bohrkronen besser passende Kombinationen von Motor-Drehzahl und Motor-Drehmoment bereitgestellt werden können bzw. dass die Werkzeugmaschine mit diesen besser passenden Kombinationen von Drehzahl und Drehmoment betrieben werden können, wodurch eine wesentlich verbesserte Performance der Werkzeugmaschine für die verschiedenen, einsetzbaren Werkzeuge erreicht werden kann. Die Bereitstellung von besser passenden Kombinationen von Drehzahl und Drehmoment wird im Sinne der Erfindung bevorzugt als "Bedienung" der Werkzeugmaschine bzw. ihrer Werkzeuge bezeichnet. Der Begriff "Bedienung" wird dabei vorzugsweise im Sinne von "ein Angebot machen" verstanden.

Die verbesserte Bedienung der Werkzeugmaschine wird insbesondere durch die elektronisch ausgebildete Drehzahlabstufung erreicht, mit der vorteilhafterweise eine Umfangsgeschwindigkeit an den unterschiedlichen Werkzeugen der Werkzeugmaschine im Wesentlichen konstant gehalten werden kann. Darüber hinaus haben Tests gezeigt, dass mit der Erfindung eine Performance der vorgeschlagenen Werkzeugmaschine insbesondere in Bezug auf Bohrgeschwindigkeit und Lebensdauer der Werkzeuge erheblich verbessert werden kann. Dies kann vorteilhafterweise durch eine Drehzahlspreizung DELTA_n von größer 2 erreicht werden, die insbesondere durch eine Auslegung, Dimensionierung und/oder Ansteuerung des Motors der vorgeschlagenen Werkzeugmaschine ermöglicht werden kann. Der Motor der Werkzeugmaschine ist ein bürstenloser Elektromotor.

In der Werkzeugmaschine wird eine elektronisch ausgebildete Drehzahlabstufung eingesetzt, die es ermöglicht, dass die Umfangsgeschwindigkeit an den unterschiedlichen Werkzeugen der Werkzeugmaschine im Wesentlichen konstant gehalten werden kann. Es ist im Sinne der Erfindung bevorzugt, dass die Umfangsgeschwindigkeit an dem bevorzugt als Bohrkrone ausgebildeten Werkzeug der Werkzeugmaschine in einem Bereich von 1 bis 10 m/s liegt und bevorzugt in einem Bereich von 2 bis 6 m/s.

Es ist im Sinne der Erfindung bevorzugt, dass für Bohrkronen mit unterschiedlichen Abmessungen eine im Wesentlichen gleiche Umfangsgeschwindigkeit an der Bohrkrone bereitgestellt werden kann. Darüber hinaus ist es im Sinne der Erfindung bevorzugt, dass die Drehzahlspreizung DELTA_n der Durchmesserspreizung DELTA_d entspricht und in Schritten der bekannten Werkzeug-Durchmesser abgestuft ist.

Es ist im Sinne der Erfindung ganz besonders bevorzugt, dass das vorgeschlagene Verfahren ohne mechanisches Getriebe an der Werkzeugmaschine auskommt. Mit anderen Worten weist die vorgeschlagene Werkzeugmaschine kein mechanisches Schaltgetriebe auf. Dadurch kann die Werkzeugmaschine besonders kompakt, leicht und handlich ausgebildet sein, so dass auch ihre Bedienung deutlich erleichtert wird.

Es ist im Sinne der Erfindung bevorzugt, dass der Motor der Werkzeugmaschine stärker auf eine höhere Leistung ausgelegt ist, als er das für die vorgesehenen Applikationen und Werkzeug-Durchmesser-Arbeits-bereiche sein müsste. Diese Überdimensionierung des Motors der vorgeschlagenen Werkzeug-maschine wird von der Volumeneinsparung durch das Weglassen des mechanischen Getriebes mehr als wettgemacht, so dass nach wie vor mit der Erfindung besonders kompakte und handliche Werkzeugmaschinen bzw. Bohrgeräte bereitgestellt werden können. Mithin wendet sich die Erfindung vom Stand der Technik ab, in dem auf die gewünschten Anwendungsbereiche abstimmte Motoren verwendet werden, die dann aber häufig mit einem aufwändigen, raumgreifenden mechanischen Getriebe zusammenarbeiten müssen. Von diesem im Stand der Technik bekannten Vorgehen wendet sich die Erfindung gerade ab, in dem die Drehzahlabstufung der Werkzeugmaschine elektronisch ausgebildet ist bzw. umgesetzt wird. Somit kann die vorgeschlagene Werkzeugmaschine beispielsweise durch die Wahl eines überdimensionierten Motors optimal für die Bedienung einer Vielzahl von unterschiedlichen Bohrkronen optimiert sein. Die vorgeschlagene Werkzeugmaschine kann insbesondere für mehr als einen Werkzeug-Durch-messer-Arbeitsbereich optimiert sein und somit vorteilhafterweise größere Werkzeug-Durchmesser-Arbeitsbereiche abdecken.

Es ist im Sinne der Erfindung bevorzugt, dass durch die Verwendung eines bürstenlosen Motors mit elektronisch umgesetzten Drehzahlabstufungen die Umfangsgeschwindigkeit an der Bohrkrone über einen weiten Bohrkronen-Durchmesser-Arbeitsbereich im Wesentlichen gleich und insbesondere optimal eingestellt werden kann. Vorzugsweise weist die Werkzeugmaschine eine Drehzahlspreizung von DELTA_n größer als 2 auf, was insbesondere durch die Auslegung des Motors, seine Dimensionierung und/oder seine Ansteuerung erreicht werden kann. Die Drehzahlspreizung von DELTA_n größer als 2 kann insbesondere durch die gewählte Motorausführung in Verbindung mit einer Drehzahlerhöhung über die natürliche maximale Drehzahl des Motors hinaus ermöglicht werden. Darüber hinaus kann durch eine definierte Motorausführung der Wirkungsgrad von einem Bereich mit hohen Drehzahlen und geringen Drehmomenten in einen Bereich geringer Drehzahl und hohen Drehmoment verschoben bzw. erweitert werden (vgl. Fig. 3). Dies ermöglicht vorteilhafterweise, dass insbesondere der höhere Leistungsbedarf von größeren Bohrkronen bzw. Werkzeugen besser bedient werden kann. Vorzugsweise sind für die Bedienung bzw. für den Betrieb von kleineren Bohrkronen kleinere Leistungswerte ausreichend, während für die Bedienung bzw. für den Betrieb von größeren Bohrkronen höhere Leistungen der Werkzeugmaschine erforderlich sind. Um eine weitere Ausweitung bzw. Erweiterung des Arbeitsbereiches der Werkzeugmaschine zu erreichen, kann eine Feldschwächung verwendet werden (vgl. Fig. 2).

Wesentliche Vorteile der Erfindung bestehen in einer erhöhten System-Performance, insbesondere in Bezug auf Bohrgeschwindigkeit und Standzeit der Werkzeuge, sowie in der Einsparung eines mechanischen Schaltgetriebes innerhalb der Werkzeugmaschine. Darüber hinaus kann ein optimales Leistungsgewicht bei ähnlichem Anwendungsbereich bereitgestellt werden, sowie ein vergleichsweise großer optimal bedienbarer Werkzeug-Durchmesser-Arbeitsbereich. Die Drehzahlerhöhung kann insbesondere durch eine Feldschwächung erreicht werden. Vorteilhafterweise kann der durch die Erfindung vergrößerte Werkzeug-Durchmesser-Arbeitsbereich durch die Feldschwächung und durch die elektronisch Drehzahlabstufung zusätzlich erweitert werden. Die Vorteile der Erfindung ergeben sich insbesondere aus der Kombination von höherer Drehzahlspreizung, elektronischer Drehzahlabstufung und hohem Wirkungsgrad bei geringer Drehzahl des Motors der Werkzeugmaschine, wobei die Vorteile der Erfindung insbesondere durch die gewählte Motorauslegung ermöglicht werden. Es hat sich als vorteilhaft erwiesen, einen überdimensionierten Motor mit einem für Feldschwächungsbetrieb spezifischem elektromagnetischem Design zu verwenden, um die Vorteile der Erfindung zu ermöglichen, wobei mit der Feldschwächung insbesondere eine Erhöhung der Drehzahl des Motors der Werkzeugmaschine erreicht werden kann.

Drehzahl n und Drehmoment M der Werkzeugmaschine können in speziellen Diagrammen gegeneinander aufgetragen werden, wobei ein jeweiliger Zusammenhang zwischen den Größen durch charakteristische Kurven dargestellt wird. Solche Auftragungen werden in den Figuren 2 und 3 gezeigt. Im Kontext der vorliegenden Erfindung ist es bevorzugt, dass ein spezieller Arbeitsbereich der Werkzeugmaschine bzw. ihres Motors von einem Bereich mit hohen Drehzahlen und geringen Drehmomenten in einen Bereich geringer Drehzahl und hohen Drehmoment verschoben werden kann. Während übliche Kurven, die den Zusammenhang zwischen Drehzahl und Drehmoment einer konventionellen Werkzeugmaschine darstellen, einen optimalen Arbeitsbereich und damit einen Bereich, in dem die höchste Effizienz bzw. der höchste Wirkungsgrad erreicht werden kann, bei hohen Drehzahlen und geringen Drehmomenten aufweisen, arbeitet die vorgeschlagene Werkzeugmaschine vorzugsweise optimal bei geringen Drehzahlen und hohen Drehmomenten. Mit anderen Worten ist es im Sinne der Erfindung bevorzugt, dass die vorgeschlagene Werkzeugmaschine bei geringen Drehzahlen und hohen Drehmomenten betrieben wird und in diesem Arbeitsbereich den maximalen Wirkungsgrad aufweist.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausgestaltung einer Werkzeugmaschine mit Werkzeug
- Fig. 2: beispielhafte Auftragung der Drehzahl n gegenüber dem Drehmoment M
- Fig. 3: beispielhafte Auftragung der Drehzahl n gegenüber dem Drehmoment M mit Darstellung verschiedener Arbeitspunkt und dem Wirkungsgrad der Werkzeugmaschine

### Figurenbeschreibung und Ausführungsbeispiel:

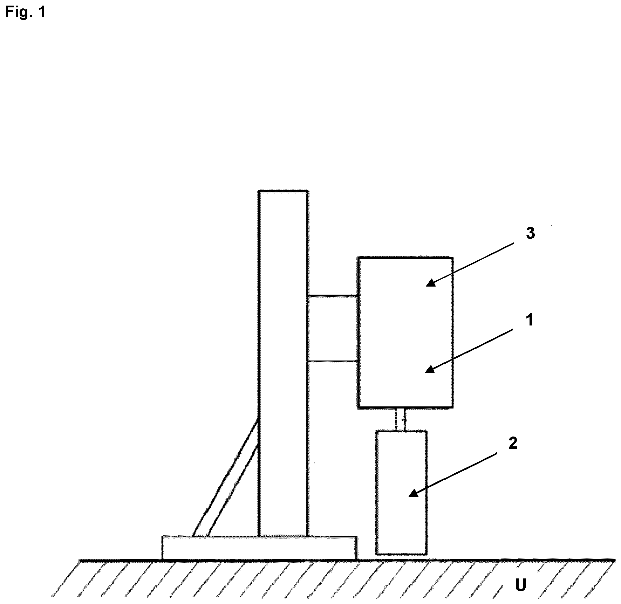

Figur 1 zeigt eine bevorzugte Ausgestaltung der Erfindung. Insbesondere zeigt Fig. 1 eine Werkzeugmaschine 1 mit Werkzeug 2. Die in Fig. 1 dargestellte Werkzeugmaschine 1 ist vorzugsweise als Kernbohrgerät ausgebildet, wobei das Werkzeug 2 von einer Bohrkrone gebildet wird. Die Werkzeugmaschine 1 umfasst darüber hinaus einen Motor 3, der als bürstenloser Elektromotor ausgebildet ist. Mit der Werkzeugmaschine 1 kann ein Untergrund U bearbeitet werden, der im unteren Bereich von Fig. 1 dargestellt ist. Alternativ können auch vertikale Wände mit der Werkzeugmaschine 1 bearbeitet werden. Kernbohrgeräte 1 sind insbesondere dazu eingerichtet, mit Hilfe der Bohrkrone 2 als Werkzeug 2 im Wesentlichen zylinderförmige Bohrkerne aus dem Untergrund U herauszuschneiden. Der Untergrund U wird meistens von Beton gebildet, der auch Armierungseisen aufweisen kann («armierter Beton»). Die in Fig. 1 dargestellte Werkzeugmaschine 1 wird zusammen mit einem Bohrständer betrieben, die die Werkzeugmaschine 1 während ihres Betriebs hält. Selbstverständlich kann es sich auch um eine handgeführte Werkzeugmaschine 1 handeln.

Fig. 2 zeigt beispielhaft eine Auftragung der Drehzahl n gegenüber dem Drehmoment M. Dabei ist die Drehzahl n des Motors 3 der Werkzeugmaschine 1 auf der y-Achse aufgetragen, während das Drehmoment M auf der x-Achse aufgetragen ist. Die Kurve, die den Zusammenhang zwischen der Drehzahl n und dem Drehmoment M bei einer vorgeschlagenen Werkzeugmaschine beschreibt, stellt vorzugsweise eine Gerade mit negativer Steigung dar, d.h. eine fallende Gerade. Die Gerade schneidet die Drehzahl-Achse in einem Punkt n0, während die Gerade die Drehmoment-Achse in einem Punkt M0 schneidet. Durch Anwendung einer Feldschwächung kann die n(M)-Kurve verändert werden. Diese Veränderung der n(M)-Kurve ist durch die nach oben abknickende Gerade mit einer steileren Steigung angedeutet. Sie stellt die Erhöhung der Drehzahl durch die Feldschwächung dar.

Fig. 3 zeigt eine weitere beispielhafte Auftragung der Drehzahl n gegenüber dem Drehmoment M mit Darstellung verschiedener Arbeitspunkte und dem Wirkungsgrad der Werkzeugmaschine 1. Die Arbeitspunkte sind durch Kreise in der Fig. 3 dargestellt. Dabei verläuft ein Wirkungsgrad (grob gestrichelte Linie) einer konventionellen Werkzeugmaschine, wie sie aus dem Stand der Technik bekannt ist so, dass ein maximaler Wirkungsgrad bei dem Drehmoment M1 erreicht wird. Auf der n(M)-Kurve, die sich zwischen den Punkten n0 und M0 erstreckt, liegt beispielsweise ein erster Arbeitspunkt, der von einer hohen Drehzahl n und einem kleinen Drehmoment M gekennzeichnet ist. Das Drehmoment dieses ersten Arbeitspunkt entspricht bevorzugt dem maximalen Wirkungsgrad M1 für konventionelle Werkzeugmaschinen. Die Lage dieses Arbeitspunkts und die Wirkungsgradkurve können im Kontext der vorliegenden Erfindung verschoben werden, so dass eine zweite oder verschobenen Wirkungsgradkurve (eng gestrichelte Linie) erhalten wird. Ein zweiter Arbeitspunkt, der auf der n(M)-Kurve zwischen den Punkten n0 und M0 liegt, wird von einer geringen Drehzahl n und einem großen Drehmoment M gekennzeichnet ist. Das Maximum M2 der verschobenen Wirkungsgradkurve entspricht dem Drehmomentswert M2 dieses zweiten Arbeitspunktes der Werkzeugmaschine 1. Die Verschiebung der maximalen Drehmomente von einem Wert M1 zu einem Wert M2 wird durch den Pfeil von links nach rechts im oberen Bereich der Fig. 3 angedeutet.

### Bezugszeichenliste

- 1: Werkzeugmaschine
- 2: Werkzeug
- 3: Motor
- n: Drehzahl des Motors
- M: Drehmoment
- U: Untergrund

## Patentansprüche

1. Verfahren zum Betrieb einer Werkzeugmaschine (1), wobei die Werkzeugmaschine (1) ein Werkzeug (2), insbesondere eine Bohrkrone, sowie einen Motor (3) aufweist,
**dadurch gekennzeichnet, dass**
der Motor (3) ein bürstenloser Elektromotor ist und in der Werkzeugmaschine (1) eine elektronisch ausgebildete Drehzahlabstufung umsetzt wird, mit der eine Umfangsgeschwindigkeit an dem Werkzeug (2) der Werkzeugmaschine (1) im Wesentlichen konstant gehalten wird, wobei durch eine Auslegung, Dimensionierung und/oder Ansteuerung des Motors (3) eine Drehzahlspreizung DELTA_n von größer 2 erreicht wird.

2. Verfahren nach Anspruch 1,
**dadurch gekennzeichnet, dass**
die Umfangsgeschwindigkeit am Werkzeug (2) der Werkzeugmaschine (1) in einem Bereich von 1 bis 10 m/s liegt und bevorzugt in einem Bereich von 2 bis 6 m/s.

3. Verfahren nach Anspruch 1 oder 2,
**dadurch gekennzeichnet, dass**
das Verfahren ohne mechanisches Getriebe an der Werkzeugmaschine (1) auskommt.

4. Verfahren nach einem der vorhergehenden Ansprüche
**dadurch gekennzeichnet, dass**
die Drehzahlspreizung DELTA_n der Werkzeugmaschine (1) einer Durchmesserspreizung DELTA_d des Werkzeugs entspricht.

5. Verfahren nach einem der vorhergehenden Ansprüche
**dadurch gekennzeichnet, dass**
die Werkzeugmaschine (1) bei geringen Drehzahlen n und hohen Drehmomenten M betrieben wird.

6. Verfahren nach einem der vorhergehenden Ansprüche
**dadurch gekennzeichnet, dass**
die Umfangsgeschwindigkeit an dem Schneid- und/oder Schleifkörper des Werkzeuges (2) der Werkzeugmaschine (1) im Wesentlichen konstant gehalten wird.

7. Werkzeugmaschine (1) mit einem Motor (3) und einem Werkzeug (3), insbesondere einer Bohrkrone,
**dadurch gekennzeichnet, dass**
die Werkzeugmaschine (1) zur Durchführung des Verfahrens nach einem der vorhergehenden Ansprüche ausbildet ist, wobei der Motor (3) der Werkzeugmaschine (1) ein bürstenloser Elektromotor ist.

8. Werkzeugmaschine (1) nach Anspruch 7
**dadurch gekennzeichnet, dass**
die Werkzeugmaschine (1) kein mechanisches Getriebe aufweist.

9. Werkzeugmaschine (1) nach Anspruch 7 oder 8
**dadurch gekennzeichnet, dass**
die Werkzeugmaschine (1) bei geringen Drehzahlen n und hohen Drehmomenten M betreibbar ist.
